# EUROPÄISCHE PATENTSCHRIFT

(11) **EP 2 336 380 B1**
(45) Veröffentlichungstag und Bekanntmachung des Hinweises auf die Patenterteilung: **29.10.2014**
(21) Anmeldenummer: 10194533.5
(22) Anmeldetag: 10.12.2010
(51) Int. Cl.: C23C 4/02, B23P 9/02

(54) **Verfahren und Werkzeug zur Oberflächenbehandlung**
Method and tool for treating surfaces
Procédé et outil pour le traitement de surface

(30) Priorität: 15.12.2009 DE 102009058178
(43) Veröffentlichungstag der Anmeldung: 22.06.2011
(73) Patentinhaber: KS Aluminium-Technologie GmbH, 74172 Neckarsulm (DE)
(72) Erfinder: Dr. Möding, Herbert, 74177 Bad Friedrichshall (DE); Schneider, Heinrich, 74072 Heilbronn (DE); Siller, Klaus, 74245 Löwenstein (DE); Rogalski, Joachim, 74177 Bad Friedrichshall (DE)
(74) Vertreter: ter Smitten, Hans

(56) Entgegenhaltungen:
- WO-A1-2006/061710
- WO-A1-2007/087989
- DE-A1- 19 753 017
- DE-A1-102008 024 313
- DE-U1-202009 014 180

## Beschreibung

Die Erfindung betrifft ein Verfahren zur Oberflächenbehandlung, wobei in einem ersten Schritt an der Oberfläche durch Spanabheben Ausnehmungen sowie Ausstülpungen erzeugt werden, in einem zweiten Schritt durch Umformen der gebildeten Ausstülpungen Hinterschnitte erzeugt werden und in einem dritten Schritt die Oberfläche umgossen wird oder auf der Oberfläche eine Spritzschicht aufgebracht wird, sowie Werkzeuge zur Oberflächenbehandlung.

Derartige Verfahren zur Behandlung von Oberflächen sind insbesondere aus dem Bereich der Herstellung von Zylinderkurbelgehäusen bekannt. Zur Verbesserung der Verschleißbeständigkeit von Zylinderlaufflächen werden entweder separate Buchsen in das Zylinderkurbelgehäuse eingegossen oder die vorhandenen Zylinder werden mit einer Spritzschicht versehen. In beiden Fällen besteht das Problem einer ausreichend guten Verklammerung zwischen den beiden Werkstoffen zum Verhindern eines Lösens. Entsprechend werden die Oberflächen mechanisch behandelt, um Strukturen zu erzeugen, die die Anbindung der beiden Werkstoffe aneinander verbessern. Insbesondere ist es bekannt, Hinterschnittstrukturen zur Verbesserung der Verklammerung der Zylinderbuchse im Kurbelgehäuse oder der die Laufbahn bildenden Verschleißschicht am Gussstück zu erzeugen.

So wird in der DE 10 2006 004 769 A1 ein Verfahren zum Aufrauen von Metalloberflächen zur Haftverbesserung vorgeschlagen, bei dem durch materialabtragende Verfahren eine Oberfläche mit Rillen und Vorsprüngen erzeugt wird und anschließend durch Verformen oder Brechen Hinterschnitte bezüglich der Oberfläche erzeugt werden. Dies erfolgt insbesondere durch Walzen, Bestrahlen oder Pressen.

Bei den beschriebenen Umformverfahren besteht das Problem, dass gewünschte Toleranzen bei der Nachbearbeitung schwer einzuhalten sind und eine gezielte Formgebung der Oberflächen nicht möglich ist.

Um eine gezielte Umformung zu erreichen, wird in der DE 10 2006 045 275 B3 ein Verfahren zur Herstellung eines beschichteten Produktes vorgeschlagen, bei dem die zu beschichtende Oberfläche mit einem Schneidwerkzeug zunächst spanabhebend unter Ausbildung eines ersten Hinterschnittes bearbeitet wird, daraufhin mit einem zweiten, spanabhebenden Schneidwerkzeug ein zweiter Hinterschnitt in die Oberfläche eingebracht wird, der zum ersten Hinterschnitt entgegengesetzt orientiert ist und anschließend die Oberfläche beschichtet wird. So können zwar definierte Hinterschnittstrukturen im Zehntelmillimeter-Bereich eingebracht werden, jedoch ist die Standzeit der Werkzeuge extrem gering, so dass dieses Verfahren insbesondere bei unterbrochenen Schnitten, wie Ventilationsbohrungen oder Durchbrüchen, nicht wirtschaftlich durchführbar ist.

Zusätzlich ist es aus der DE 102 56 591 A1 bekannt, eine Zylinderlaufbuchse durch Rundkneten von Rohren herzustellen. Eine Strukturierung der Oberfläche zur besseren Haftung wird dabei jedoch nicht offenbart.

Des Weiteren ist aus der DE 10 2008 024 313 A1 ein Verfahren zur Behandlung von zu beschichtenden Oberflächen bekannt, bei dem in einem ersten Schritt spanend Vorformen in eine Oberfläche eingebracht werden und anschließend diese durch einen spanlosen folgenden Verfahrensschritt, insbesondere Spalten oder Stauchen, so umgeformt werden, dass Hinterschnitte erzeugt werden. Hierbei entstehen jedoch keine gleichmäßigen Hinterschnitte in beide Richtungen.

Es stellt sich daher die Aufgabe, ein Verfahren bereitzustellen, mit dem maßgenau Hinterschnittstrukturen in eine Oberfläche eingebracht werden können und ein Brechen von Graten beziehungsweise der gebildeten Vorsprünge verhindert werden kann. Gleichzeitig soll das Verfahren wirtschaftlich durchführbar sein, das heißt der Verschleiß an Werkzeugen minimiert werden.

Diese Aufgabe wird durch ein Verfahren mit den Merkmalen des Anspruchs 1 und ein Werkzeug mit den Merkmalen des Anspruchs 6 gelöst.

Dadurch, dass im zweiten Schritt zwei definierte, zu entgegengesetzten Richtungen orientierte Hinterschnitte an den Ausstülpungen durch Umformen erzeugt werden, wobei der Quotient aus Vorschubgeschwindigkeit und Tangentialgeschwindigkeit eines Umformelementes der Steigung der Ausstülpungen entspricht, wird eine homogene Werkstoffumformung erreicht, welche sehr maßgenau durchgeführt werden kann, so dass definierte Strukturen entstehen. Bei einer derartigen Bewegung des Umformelementes wird die bei den bekannten Verfahren vorhandene Reibung an den Oberflächen der Ausstülpungen minimiert, da keine Kraft durch den Vorschub des Werkzeugs in axialer Richtung auf die Ausstülpungen wirkt. Dies minimiert die vorhandenen Scherkräfte, wodurch die entgegengesetzt orientierten Hinterschnittstrukturen ermöglicht werden. Dabei wird für zu beschichtende innere Oberflächen, wie Zylinder in Verbrennungskraftmaschinen, das Prinzip des inversen Rundknetens zum Umformen eingesetzt, bei dem als Umformelement dienende Stößel einer Rundknetmaschine nach radial außen gegen Abschnitte der Ausstülpungen einer inneren Oberfläche eines Hohlzylinders geschlagen werden und für zu umgießende Laufbuchsen das Prinzip des Rundknetens zum Umformen eingesetzt, bei dem die Stößel der Rundknetmaschine nach radial innen gegen die Ausstülpungen einer äußeren Oberfläche eines Hohlzylinders geschlagen werden.

Rundkneten ist ein inkrementeller Umformprozess, der sich durch eine hohe Prozessgenauigkeit auszeichnet. Die zum Umformen benötigten Kräfte sind im Vergleich zu anderen umformenden Verfahren relativ klein, da das Formänderungsvermögen des Werkstoffs im gesamten Querschnitt der Ausstülpung genutzt wird. Entsprechend sind diese beiden Verfahren sehr wirtschaftlich durchführbar. Zudem ist keine Spanabfuhr erforderlich, die bei feinen Strukturen bei den bekannten Verfahren erhebliche Probleme bereitet. Scherkräfte an den Ausstülpungen können auf einfache Weise vermieden werden.

Vorzugsweise werden im ersten Verfahrensschritt durch Schneiden in Umfangsrichtung verlaufende Ausnehmungen in die Oberfläche eingebracht. Diese bilden bereits eine erste Verklammerungsstruktur, über die ein axiales Verschieben der Zylinderlaufbuchse zum Gehäuse oder zur Spritzschicht weitestgehend vermieden wird. Diese Ausnehmungen können ein Rechteck- oder auch Trapezprofil aufweisen.

Alternativ hierzu wird im ersten Verfahrensschritt durch Schneiden ein gewindeähnliches Profil an der Oberfläche erzeugt, was den zusätzlichen Vorteil aufweist, dass durchgehend geschnitten werden kann.

In einer weiterführenden Ausführung werden zwei gegenläufige gewindeähnliche Profile in die Oberfläche eingebracht, so dass eine Rändelstruktur erzeugt wird. Entsprechend entstehen nach der Umformung zusätzliche Hinterschnittstrukturen, die die Haftung einer aufgebrachten Spritzschicht noch einmal verbessern.

Vorzugsweise werden der erste und der zweite Verfahrensschritt unmittelbar aufeinander folgend mittels eines einzigen Werkzeugs ausgeführt. Auf diese Weise können Bearbeitungszeiten minimiert werden. Die gleichmäßige Drehbewegung des Rundknetwerkzeugs oder des Rollierwerkzeugträgers wird dabei gleichzeitig als Antrieb zum Schneiden genutzt.

Dies erfolgt vorteilhafterweise mittels eines Werkzeugs zur Oberflächenbehandlung, bei dem an einem angetriebenen Ring oder an einer angetriebenen Welle der inversen Rundknetmaschine oder Rundknetmaschine eine Schneide angeordnet ist, die in Bewegungsrichtung vor den Stößeln der Rundknetmaschine angeordnet ist. So wird in einem Arbeitsgang sowohl das Gewinde als auch die Hinterschnittstruktur durch Umformen hergestellt.

Es wird somit ein Verfahren sowie ein Werkzeug zur Oberflächenbehandlung geschaffen, mit denen wirtschaftlich maßgenaue, definierte Hinterschnittstrukturen auf der Oberfläche erzeugt werden können. Das Verfahren zeichnet sich durch eine hohe Wirtschaftlichkeit durch verringerte Werkzeugkosten aus. Ein ungewolltes Brechen der Hinterschnittstrukturen wird vermieden.

Das erfindungsgemäße Verfahren sowie zwei möglich Werkzeuge zur Durchführung des Verfahrens werden anhand der Figuren im Folgenden erläutert.

Figur 1 zeigt eine Prinzipskizze einer durch ein bekanntes Verfahren mittels Drücken hergestellten Struktur.

Figur 2 zeigt eine Prinzipskizze eines Glattwalzwerkzeugs zur Durchführung eines bekannten Verfahrens.

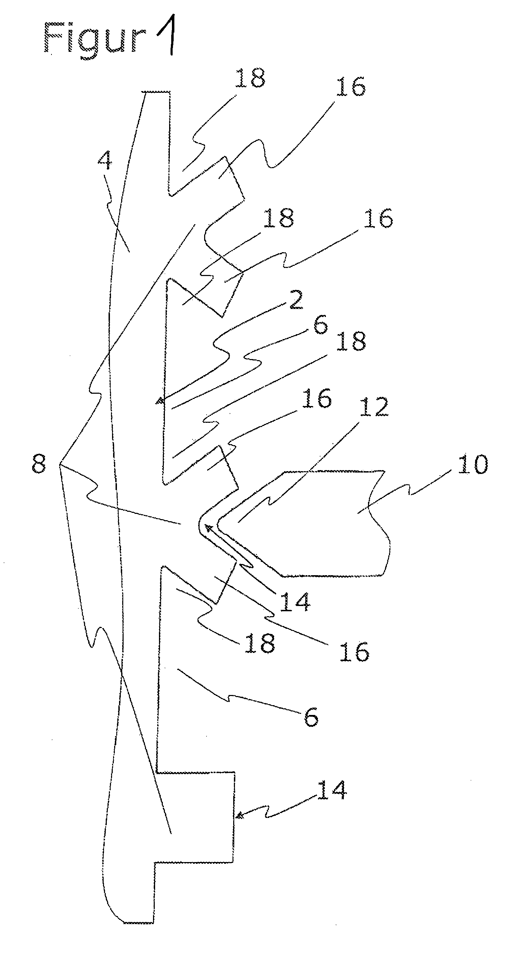

Die in der Figur 1 dargestellte Oberfläche 2 ist beispielsweise die stark vergrößert dargestellte innere Oberfläche 2 eines Zylinders eines Zylinderkurbelgehäuses 4 einer Verbrennungskraftmaschine. In diese Oberfläche 2 wurden zunächst durch Spanabheben, insbesondere durch Schneiden, Nuten eingebracht, welche insbesondere die Form eines Gewindes aufweisen können. Durch das Schneiden entstehen an der Oberfläche somit Ausnehmungen 6 und Ausstülpungen 8, welche sich in axialer Erstreckungsrichtung des Zylinders abwechseln. Die verwendete Schneide kann dabei Erhöhungen oder Vertiefungen aufweisen.

Es sind drei Ausstülpungen 8 dargestellt, wobei an der in Figur 1 oberen Ausstülpung 8 ein weiterer Bearbeitungsschritt durch Umformen bereits stattgefunden hat, an der mittleren Ausstülpung 8 die Umformung gerade stattfindet und die untere Ausstülpung 8 noch nicht weiter bearbeitet wurde. Der Querschnitt dieser noch nicht weiter bearbeiteten Struktur ist im Wesentlichen rechteckig, wobei diese Form von der im ersten Arbeitsschritt verwendeten Schneide abhängig ist.

Auf diesen Querschnitt wird mittels eines Rollierwerkzeugs 10 in Form eines Einrollenwerkzeugs ein Druck ausgeübt, der eine Verformung des Querschnittes zur Folge hat. Das Rollierwerkzeug 10 besteht aus einer Rolle 11, die an ihrem zur Ausstülpung 8 weisenden Ende 12 spitz zulaufend ausgebildet. Hierbei bedeutet spitz zulaufend, dass am Ende 12 ein Radius von 1-3° am Werkzeug ausgebildet ist. Dieses Ende 12 setzt in einem axial mittleren Abschnitt 14 des rechteckigen Querschnitts der Ausstülpung 8 auf, wodurch das Material, wie dargestellt, zu beiden axial entgegengesetzten Seiten verdrängt wird. Auf diese Weise entstehen zwei entgegengesetzt orientierte Flügel 16, in deren Schatten Hinterschnitte 18 entstehen.

Die Rolle 11 wird zur Herstellung dieser Struktur auf den einzelnen Ausstülpungen 8 abgerollt, so dass jeweils nur ein kleiner Abschnitt der Ausstülpung 8 mit Druck belastet und somit umgeformt wird. Bei einem gewindeähnlich geschnittenen Profil kann dieses Abrollen fortschreitend kontinuierlich durchgeführt werden, indem die Rolle 11 entlang des gesamten Gewindeprofils auf dem mittleren Abschnitt 14 der Ausstülpung geführt wird, bis das Ende des Profils erreicht wird. Bei einzelnen hintereinander angeordneten Nuten beziehungsweise Ausstülpungen 8 wird die Rolle 11 jeweils abgesetzt und zur nächsten Ausstülpung 8 axial verschoben.

Die Rolle 11 ist üblicherweise an einem Träger des Rollierwerkzeugs 10 befestigt, der eine Kreisbewegung vollzieht. Im Vorlauf zur Rolle 11 kann eine Schneide zur Durchführung des ersten Verfahrensschritts am gleichen Träger geführt werden, wodurch Bearbeitungszeiten reduziert werden können.

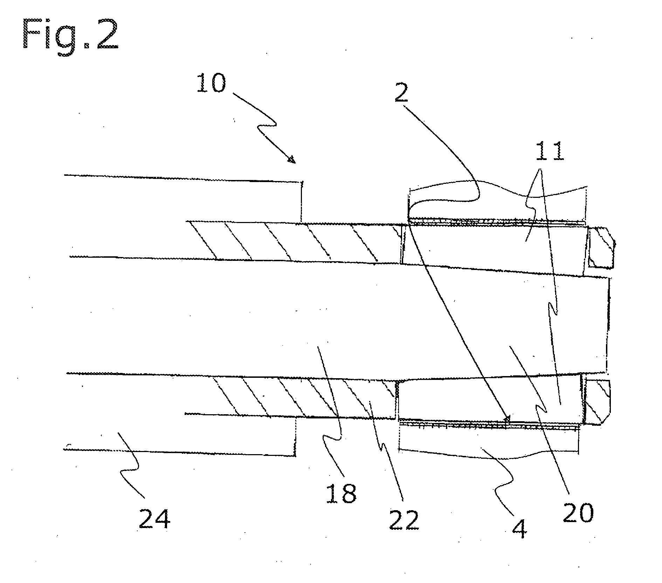

Des Weiteren ist es möglich, ein Rollierwerkzeug 10 mit einem Gehäuse 24, wie es in Figur 2 dargestellt ist, zu benutzen, welches vier sich axial erstreckende Rollen 11 aufweist. Durch die Drehbewegung des Druckstempels 18, der an seinem Ende einen Konus 20 aufweist, werden die vier ebenfalls mit einem umgekehrten Konus versehenen Rollen 11 entlang der zu behandelnden Oberfläche 2 abgerollt. Durch einen axialen Vorschub des Druckstempels 18 innerhalb des Druckrollenhalters 22 wird der durch die Rollen 11 aufgebrachte, nach radial außen wirkende Druck erhöht.

Eine erfindungsgemäße Ausführung eines spanlosen fortschreitenden, jedoch schrittweisen Umformverfahrens mittels Schlagens auf einen Abschnitt der Ausstülpungen wird im Folgenden beschrieben.

Das Umformen erfolgt hierbei durch Rundkneten. Rundkneten als inkrementelles Umformverfahren ist bekannt. Dabei wird in der vorliegenden Anwendung eine im folgenden Verfahrensschritt einzugießende Zylinderbuchse durch hochfrequent oszillierende Werkzeuge mit geringem Hub spanlos mittels äußerer Krafteinwirkung umgeformt, nachdem ihr Außenumfang durch Schneiden so bearbeitet wurde, dass Nuten am Außenumfang entstehen.

Eine typische Rundknetmaschine besteht aus einer angetriebenen gelagerten Welle, deren Kopf beispielsweise kreuzförmig geschlitzt ist. In jedem Schlitz ist ein Stößel angeordnet, der jeweils eine nach außen weisende gekrümmte Abrollbahn aufweist, die im Vergleich zum Außenumfang der Welle geringfügig nach außen vorsteht. Acht, zwölf oder sechzehn durch einen Käfig in gleichem Abstand angeordnete Laufrollen rotieren, angetrieben durch die sich drehende Welle, mit einer sich zwangsläufig ergebenden Relativzahl im gleichen Drehsinn, jedoch wesentlich langsamer als die Welle selbst um die sich drehende Welle. Die Differenz zwischen Rollenumlauf und Wellendrehzahl hat zur Folge, dass die Abrollbahnen und somit die Stößel in kurzen Zeitfolgen überrollt werden. Der geringfügig vorstehende Außenumfang der Abrollbahn bewirkt bei jedem Überrollen einen Stößelhub, der ein Drücken auf eine Ausstülpung der Oberfläche bewirkt. Der Rückhub der Stößel wird durch die Fliehkraft und während des An- und Auslaufs durch zusätzliche Federn bewerkstelligt. Bei Durchführung dieses Verfahrens sollte zur Verhinderung einer Innendurchmesserschrumpfung ein Dorn angeordnet werden. Die Rundknetmaschine kann nun langsam entlang der Achse der Zylinderbuchse bewegt werden. Trotz dieses Vorschubs wird eine rein radial gerichtete Kraft durch die Stößel auf die Ausstülpungen ausgeübt.

Selbstverständlich ist dabei darauf zu achten, dass der Hub der Stößel so angepasst wird, dass lediglich der gewünschte Druck auf die Ausstülpungen ausgeübt wird, das heißt bei maximalem Hub des Stößels dieser die Oberfläche der Aussparungen nicht erreicht.

Ein ähnliches Werkzeug zur Umformung kann zur Bearbeitung innerer Zylinderflächen genutzt werden. Hierbei wird der Prozess des Rundknetens invertiert. Dies bedeutet, dass eine sich drehende am Kopf geschlitzte Hohlwelle angetrieben wird, an deren Innenumfang die Rollen laufen, welche in einem Käfig angeordnet sind. Im Innern befindet sich ein stillstehender oder ebenfalls angetriebener Zylinder. In den Schlitzen der Hohlwelle sind die Stößel geführt, welche an ihrem nach radial nach innen weisenden Ende eine Krümmung aufweisen, die einen größeren Krümmungsradius als der Radius des Innenumfangs der Hohlwelle aufweisen. Somit fungieren diese Stößel in gleicher Weise als Nocken wie bei der Rundknetmaschine.

Bei beiden beschriebenen Knetverfahren findet kein Vorschub statt, der zu einer Bewegung entlang der Zylinderachse relativ zur Zylinderbohrung und somit zum Auftreten axialer Schubkräfte führen würde. Der schlagende Stößel als Umformelement macht eine rein radiale Bewegung. Bei Verwendung der Rollen selbst als Schlagzylinder ergibt sich zusätzlich eine Bewegung in Umfangsrichtung. Bezüglich einer axialen Vorschubgeschwindigkeit gelten dann die folgenden Einschränkungen.

Bei einem Gewindeprofil verhält sich die axiale Vorschubgeschwindigkeit zur Tangentialgeschwindigkeit wie die Länge des überstrichenen Umfangs zur überstrichenen Höhendifferenz. Daraus ergibt sich, dass keine Scherkräfte auf die Ausstülpung wirken, die zu einem Fließen des Werkstoffs führen würden.

Eine axiale Bewegung des Umformwerkzeugs erfolgt bei gewindeähnlichen Schneidprofilen lediglich mit sehr geringer Geschwindigkeit oder bei nicht gewindeähnlichen, sondern hintereinander folgenden Nuten, ohne axialen Geschwindigkeitsvektor. So kann eine Schubbelastung an den Ausstülpungen in axialer Richtung verhindert werden, wodurch im Wesentlichen symmetrische definierte Profile erzeugt werden können, da ein Fließen des Materials in Vorschubrichtung des Werkzeugs durch das Nichtvorhandensein einer Vorschubbewegung vermieden wird.

Auf diese Weise können Profile erzeugt werden, die eine hohe Haftung einer in einem folgenden Verfahrensschritt durch Spritzen aufgebrachten Verschleißschicht gewährleisten. Dabei ist der Verschleiß des Werkzeugs deutlich geringer als bei den bekannten spanabhebenden Verfahren. Die Höhendifferenz zwischen den Ausstülpungen und den Ausnehmungen beträgt dabei etwa 0,05 bis 0,5 mm, bevorzugt 0,1 bis 0,2 mm, der axiale Abstand zwischen den Ausstülpungen etwa 0,8 bis 5 mm, bevorzugt 1 bis 2,5 mm.

Die beschriebenen Verfahren eignen sich zur Erzeugung einer Verklammerungsstruktur zum anschließenden Umgießen oder anschließendem Erzeugen einer Spritzschicht durch Flamm- oder Plasmaspritzen oder ähnliches. Die Struktur erzeugt eine hohe Haftung der umgebenden Schichten, wodurch ein Lösen beinahe vollständig ausgeschlossen wird. Zusätzlich kann anschließend noch ein Strahl- oder Bürstvorgang zur weiteren Verbesserung der Struktur durchgeführt werden, falls die entstehende Oberfläche der umgeformten Struktur zu glatt sein sollte.

Der spanlose zweite Verfahrensschritt ermöglicht die Herstellung definierter weitgehend symmetrischer Hinterschnittstrukturen. Diese können kostengünstig ohne hohen Werkzeugverschleiß hergestellt werden. Vorteilhaft ist dies auch bei zu bearbeitenden Oberflächen, welche Lücken in den zu behandelnden Strukturen aufweisen, an denen bei einer kontinuierlichen Schneidbearbeitung als zweiten Schritt nach dem Durchfahren der Lücken Aufschlagkräfte entstünden, welche die Schneide häufig zerstören.

Selbstverständlich sind konstruktive Änderungen insbesondere bezüglich der Ausführungen der beschriebenen Werkzeuge denkbar, ohne den Schutzbereich der Hauptansprüche zu verlassen.

## Patentansprüche

1. Verfahren zur Oberflächenbehandlung, wobei in einem ersten Schritt an der Oberfläche durch Spanabheben Ausnehmungen sowie Ausstülpungen erzeugt werden, in einem zweiten Schritt durch Umformen der gebildeten Ausstülpungen Hinterschnitte erzeugt werden und in einem dritten Schritt die Oberfläche umgossen wird oder auf der Oberfläche eine Spritzschicht aufgebracht wird, wobei im zweiten Schritt zwei definierte, zu entgegengesetzten Richtungen orientierte Hinterschnitte (18) an den Ausstülpungen (8) durch Umformen erzeugt werden, wobei der Quotient aus Vorschubgeschwindigkeit und Tangentialgeschwindigkeit eines Umformelementes (11) der Steigung der Ausstülpungen (8) entspricht,
**dadurch gekennzeichnet, dass**
das Prinzip des inversen Rundknetens zum Umformen eingesetzt wird, bei dem als Umformelement dienende Stößel einer Rundknetmaschine nach radial außen gegen Abschnitte der Ausstülpungen (8) einer inneren Oberfläche (2) eines Hohlzylinders geschlagen werden oder das Prinzip des Rundknetens zum Umformen eingesetzt wird, bei dem die Stößel der Rundknetmaschine nach radial innen gegen die Ausstülpungen (8) einer äußeren Oberfläche (2) eines Hohlzylinders geschlagen werden.

2. Verfahren zur Oberflächenbehandlung nach Anspruch 1,
**dadurch gekennzeichnet, dass**
im ersten Verfahrensschritt durch Schneiden in Umtangsrichtung verlaufende Ausnehmungen (6) in die Oberfläche (2) eingebracht werden.

3. Verfahren zur Oberflächenbehandlung nach Anspruch 2,
**dadurch gekennzeichnet, dass**
im ersten Verfahrensschritt durch Schneiden ein gewindeähnliches Profil an der Oberfläche (2) erzeugt wird.

4. Verfahren zur Oberflächenbehandlung nach Anspruch 3,
**dadurch gekennzeichnet, dass**
zwei gegenläufige gewindeähnliche Profile in die Oberfläche (2) eingebracht werden.

5. Verfahren zur Oberflächenbehandlung nach einem der vorhergehenden Ansprüche,
**dadurch gekennzeichnet, dass**
der erste und zweite Verfahrensschritt unmittelbar aufeinander folgend mittels eines einzigen Werkzeugs ausgeführt werden.

6. Werkzeug zur Oberflächenbehandlung,
**dadurch gekennzeichnet, dass**
an einem angetriebenen Ring oder an einer angetriebenen Welle der inversen Rundknetmaschine oder Rundknetmaschine eine Schneide angeordnet ist, die in Bewegungsrichtung vor den Stößeln der Rundknetmaschine angeordnet ist.

## Claims

1. A method for treating surfaces, wherein, in a first step, recesses and protuberances are created at the surface by machining, undercuts are formed in a second step by forming the protuberances created, and in a third step, the surface is cast-in or a sprayed layer is applied onto the surface, wherein, in the second step, two defined undercuts (18) oriented in opposite directions are created at the protuberances (8) by forming, wherein the quotient of the feed rate and the tangential speed of a forming element (11) corresponds to the incline of the protuberances (8),
**characterized in that**
the principle of inverse rotary swaging is used for forming, wherein rams of a rotary swaging machine, which serve as the forming element, strike radially outward against sections of the protuberances (8) of the inner surface (2) of a hollow cylinder, or the principle of rotary swaging is used for forming, wherein the rams of a rotary swaging machine strike radially inward against the protuberances (8) of the outer surface (2) of a hollow cylinder.

2. The method for treating surfaces as defined in claim 1, **characterized in that** in the first method step, circumferentially extending recesses (6) are made in the surface (2) by cutting.

3. The method for treating surfaces as defined in claim 2, **characterized in that** in the first method step, a thread-like profile is created in the surface (2) by cutting.

4. The method for treating surfaces as defined in claim 3, **characterized in that** two oppositely directed thread-like profiles are created in the surface (2).

5. The method for treating surfaces as defined in of one of the preceding claims, **characterized in that** the first and the second method step are performed immediately one after the other using a single tool.

6. A tool for treating surfaces, **characterized in that** a cutting edge is provided at a driven ring or a driven shaft of an inverse rotary swaging machine or a swaging machine, the edge being arranged ahead of the rams of the rotary swaging machine in the direction of movement.

## Revendications

1. Procédé de traitement de surface, dans lequel, dans une première étape, des évidements et des protubérances sont formés dans la surface par enlèvement de copeaux, des contre-dépouilles sont formés dans une deuxième étape par formage des protubérances formées, et, dans une troisième étape, la surface est surmoulée ou une couche projetée est appliquée sur la surface, deux contre-dépouilles (18) définies, orientées dans des directions opposées, étant formées aux protubérances (8) dans la deuxième étape, le quotient de la vitesse d'avance et la vitesse tangentielle d'un élément de formage (11) correspondant à l'inclinaison des protubérances (8),
**caractérisé en ce que**
l'on utilise le principe de retreint rotatif inversé pour le formage, où des poussoirs d'une machine de retreint rotatif, servant comme éléments de formage, frappent radialement vers l'extérieur contre des sections des protubérances (8) d'une surface intérieure (2) d'un cylindre creux, ou l'on utilise le principe de retreint rotatif pour le formage, où des poussoirs d'une machine de retreint rotatif frappent radialement vers l'intérieur contre des sections des protubérances (8) d'une surface extérieure (2) d'un cylindre creux.

2. Procédé de traitement de surface selon la revendication 1, **caractérisé en ce que** dans la première étape du procédé, des évidements (6) circonférentiels sont coupés dans la surface (2).

3. Procédé de traitement de surface selon la revendication 2, **caractérisé en ce que** dans la première étape du procédé, un profilé de type filet est coupé dans la surface (2).

4. Procédé de traitement de surface selon la revendication 3, **caractérisé en ce que** deux profilé de type filet inversé sont formés dans la surface (2).

5. Procédé de traitement de surface selon l'une quelconque des revendications précédentes, **caractérisé en ce que** la première et la deuxième étape du procédé sont exécutées l'une immédiatement après l'autre en utilisant un seul outil.

6. Outil pour le traitement de surface, **caractérisé en ce qu'**une lame est prévue sur un anneau entrainé ou un arbre entrainé de la machine de retreint rotatif inversé ou de la machine de retreint rotatif, la lame étant disposée à l'avant des poussoirs de la machine de retreint rotatif, vu dans la direction de mouvement.
